Europäisches Patentamt

European Patent Office

Office européen des brevets

(11) Veröffentlichungsnummer: **0 338 384**
**A2**

(12) **EUROPÄISCHE PATENTANMELDUNG**

(21) Anmeldenummer: **89106391.9**

(22) Anmeldetag: **11.04.89**

(51) Int. Cl.⁴: **H02K 15/04**

(30) Priorität: **16.04.88 DE 3812728**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Veser, Franz**
**Kanalstrasse 16**
**D-7980 Ravensburg(DE)**

(72) Erfinder: **Veser, Franz**
**Kanalstrasse 16**
**D-7980 Ravensburg(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) **Wickelschablone für in den Stator einer elektrischen Maschine einziehbare Spulen.**

(57) Die Erfindung geht von einer speziellen Wickelschablone für in den Stator einer elektrischen Maschine einziehbare Spulen aus. Diese besteht aus zwei Schablonenhälften, die auf umlaufende Tragstäbe mit einstellbarem Abstand aufsteckbar sind. Eine der Schablonenhälften hat an der Basisseite eine ablösbare Spulenstütze mit einer Aufnahmeöffnung für einen dritten Tragstab. Um für verschiedene Wicklungsarten und Statorabmessungen nicht immer wieder neue Wickelschablonen herstellen zu müssen, wird ein Bauelementesystem vorgeschlagen, um aus einer überschaubaren Zahl verschiedener Elemente Schablonen beliebiger Bauformen und Größen herstellen zu können. Eine Schablonenhälfte besteht demnach aus einem auf den betreffenden Tragstab aufsteckbaren Zentralstück (5) und einzelnen Teilschablonen (10) mit je einer Drahtkammer, die auf das Zentralstück (5) aufsteckbar sind, wobei mit Hilfe dazwischen einfügbarer Distanzstücke (17) der radiale Sprung zwischen einzelnen Teilschablonen wählbar ist. Magnetische Haftmittel zwischen dem Zentralstück (5) und einer Spulenstütze sowie die Aufteilung der letzteren in mehrere Stützkammeraufsätze ermöglichen eine weitere Variierung und erleichtern das Arbeiten mit derartigen Wickelschablonen.

FIG.1

FIG.2

FIG.3

## "Wickelschablone für in den Stator einer elektrischen Maschine einziehbare Spulen"

Die Erfindung betrifft eine Wickelschablone für in den Stator einer elektrischen Maschine einziehbare Spulen mit zwei bezogen auf die Wickelachse einander diametral gegenüberliegenden halbrunden, in Drahtkammern gegliederten Schablonenhälften, die auf umlaufende, hinsichtlich ihres gegenseitigen Abstandes einstellbare Tragstäbe einer Spulenwickelmaschine aufsteckbar sind, wobei eine der Schablonenhälften an der von den Drahtkammern abgewendeten Basisseite eine ablösbare Spulenstütze aufweist, an der eine zur Wickelachse parallele Aufnahmeöffnung für einen dritten Tragstab ausgebildet ist und deren Stützflächen den Drahtkammern entsprechend gestuft sind.

Eine Wickelschablone dieser Art ist aus der EP-OS 0 180 167, Figuren 9 bis 11, bekannt. Die Schablonenhälften weisen einstückige Schablonensätze auf, die zum Wickeln von mehreren Spulen mit mehreren gestuften Drahtkammern versehen sind, die unterschiedliche Halbmesser haben. Auch die Spulenstütze ist einstückig und hat einen quadrischen Aufnehmer, der an der Basisseite in den Schablonensatz eingesteckt werden kann.

Die fortschreitende Verfeinerung der Einziehtechnik, insbesondere der Verfahren zum Übertragen der Spulen von den Wickelschablonen auf das Einziehwerkzeug, hat die Anforderungen an die individuellen Abmessungen der Spulen erhöht. Man braucht daher Schablonen, die einerseits die unterschiedlichsten Krümmungsradien haben und andererseits mit unterschiedlichen Abständen zwischen den einander zugeordneten Schablonenhälften an der Wickelmaschine angeordnet sind. Dadurch ergeben sich unterschiedliche Windungslängen. Bei einstückigen Schablonensätzen mit Drahtkammern gleicher oder unterschiedlicher Krümmungsradien läßt sich allerdings der "Sprung", d. h. der Unterschied zwischen den größten Entfernungen der Stützflächen zweier benachbarter Drahtkammern von der Wickelachse, nicht einstellen. Zur Herstellung von Zwei-und höherzahligen Mehrlochwicklungen sind Schablonensätze mit zwei oder mehr Kammern erforderlich, so daß angesichts der unterschiedlichen Statorgrößen die erforderliche Zahl der Wickelschablonen ins Unermeßliche wächst. Werden aus Ersparnisgründen beispielsweise bei vierkammrigen Schablonensätzen nur zwei Kammern belegt, so ist der Ausnutzungsgrad der Wickelmaschinen unbefriedigend.

Der Erfindung liegt die Aufgabe zugrunde, ein Bauelementesystem zu schaffen, mit dem es möglich ist, aus Einzelteilen mit einer überschaubaren Zahl von Formen und Größen Wickelschablonen zusammenzusetzen, die hinsichtlich der Zahl der Kammern, der Krümmungsradien und der Sprünge in feiner Abstufung frei kombinierbar sind, so daß stets auch die Wickelmaschine voll ausgenutzt wird.

Diese Aufgabe wird bei einer Wickelschablone der einleitend bezeichneten Art erfindungsgemäß dadurch gelöst, daß die Schablonenhälften ein auf den betreffenden Tragstab aufsteckbares Zentralstück und einzelne Teilschablonen mit je einer Drahtkammer aufweisen, die auf das Zentralstück aufsteckbar sind, wobei der Abstand der Basis der Teilschablonen vom Tragstab einstellbar oder wählbar ist. Letzteres ist gleichbedeutend mit der Einstellung oder Wahl des Sprunges und kann vorzugsweise dadurch verwirklicht werden, daß zwischen der Teilschablone und dem Zentralstück ein Distanzstück bestimmter Dicke eingefügt wird oder eine Klemmanordnung vorgesehen ist, so daß eine stufenlose Einstellung möglich ist oder bestimmte Stellungen durch Rasten erfühlbar sind.

Sowohl das Zentralstück als auch die Teilschablonen werden zweckmäßigerweise als Spritzgußteile aus Kunststoff hergestellt, wobei die Steckverbindungen infolge der dabei möglichen Genauigkeit und der Elastizität des Kunststoffs so zuverlässig und haltbar sind, daß die Teilschablonen trotz der beim Wickeln auftretenden Zentrifugalkräfte auf dem Zentralstück haften bleiben. Im übrigen werden die Vorteile der Erfindung auch dann erreicht, wenn Einzelteile der baukastenmäßig zusammengefügten Wickelschablonen dauerhaft, beispielsweise durch Kleben, miteinander verbunden werden. Vorzugsweise wird man die Zentralstücke in Größen für zwei, drei oder vier Teilschablonen auf Lager legen, so daß die damit erstellten Schablonenhälften wie die bekannten Schablonensätze gehandhabt werden können.

Bei der bekannten Wickelschablone hat es sich als nachteilig erwiesen, daß die Spulenstütze mit dem Schablonensatz nur außerhalb des Tragstabes der Wickelmaschine zusammengefügt werden kann und das Lösen der gegenseitigen Steckverbindung nach der übernahme auf den dritten Tragstab verhältnismäßig umständlich ist. In Weiterbildung der Erfindung wird deshalb vorgeschlagen, daß das Zentralstück und die Spulenstütze zur gegenseitigen lösbaren Befestigung mit Haftmagneten und Eisenplättchen ausgestattet sind. Somit kann ohne die Spulenstütze gewickelt werden und erst nach Fertigstellung der Spulen wird die Spulenstütze an die obere Schablonenhälfte angesetzt. Dies trägt auch zur zeitlich besseren Nutzung der Spulenstützen bei, die während des Wickelns noch zum übertragen der vorher gewickelten Spulen benötigt werden. Außerdem kann nach dem Wenden das Zentralstück mit seinen Teilschablonen von der die Spulen tragenden Spulenstütze durch Abkippen um die Tragstabachse leichter entfernt werden.

Bei den Spulenstützen besteht hinsichtlich der Anzahl der Drahtkammern und der gegenseitigen Sprünge dasselbe Anpassungsproblem, denn insbesondere die Sprünge sollten den Sprüngen bei der entsprechenden Schablonenhälfte genau entsprechen. Es wird deshalb vorgeschlagen, daß die Spulenstütze aus einer von dem dritten Tragstab aufnehmbaren, dem Zentralstück ähnlichen Steckleiste und einzelnen Stützkammeraufsätzen unterschiedlicher Höhe besteht, die auf die Steckleiste aufsteckbar sind. Zur Bemessung unterschiedlicher Sprünge können auch hier Distanzplättchen eingefügt werden.

Ein Ausführungsbeispiel der Erfindung wird nachfolgend anhand der Zeichnung erläutert. Die Figuren 1 bis 5 stellen die Einzelteile der Wikkelschablone im Querschnitt nach der in Figur 6 angedeuteten Schnittlinie dar. Im einzelnen zeigt in natürlicher Größe

Fig. 1 eine aufsteckbare Teilschablone,

Fig. 2 ein in diese einfügbares Distanzstück,

Fig. 3 ein Zentralstück zum Aufstecken auf einen der Tragstäbe der Wickelmaschine,

Fig. 4 eine an dem Zentralstück magnetisch haftbare Steckleiste,

Fig. 5 einen Stützkammeraufsatz für die Steckleiste und

Fig. 6 die Seitenansicht einer Schablonenhälfte mit Spulenstütze, wobei einige der Einzelteile im Schnitt dargestellt sind.

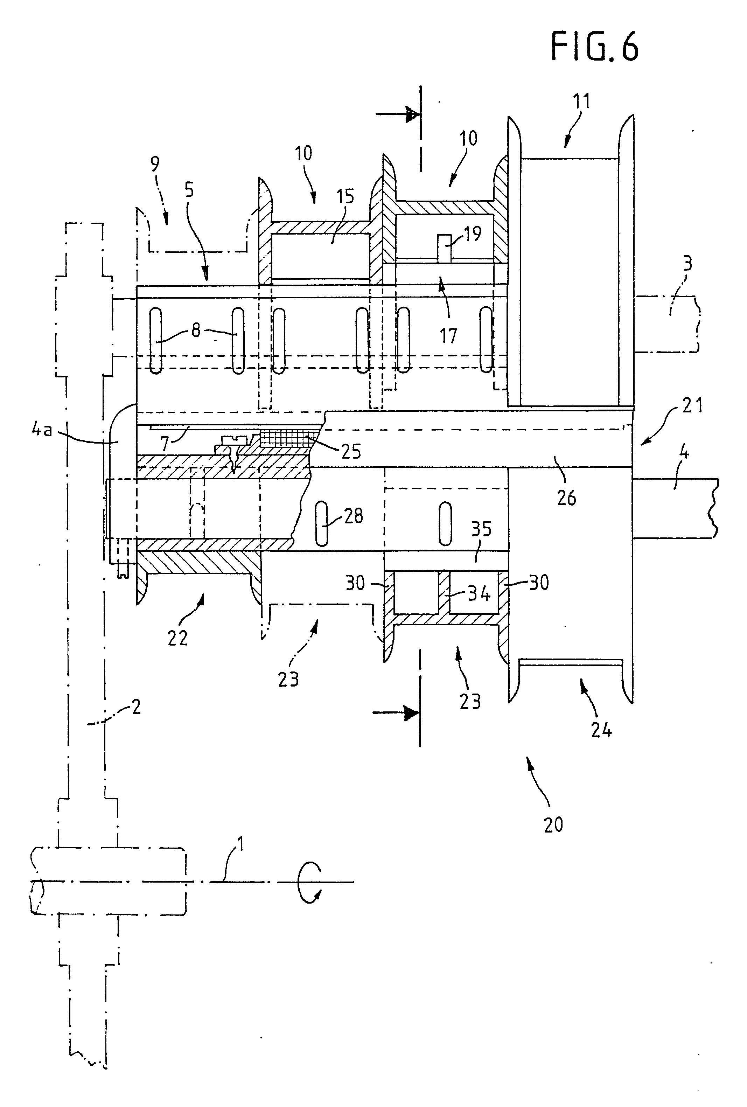

Nach Fig. 6 ist die Wickelachse mit 1 bezeichnet. Auf der gleichachsigen Welle eines Wickelautomaten sitzt ein zweiarmiger Dreharm 2, an dessen Enden zwei achsparallele Tragstäbe 3 angebracht sind, die einen quadratischen Querschnitt haben und von denen nur einer dargestellt ist. Nach Fertigstellung der Spulen wird die gezeigte Schablonenhälfte (oder ggf. mehrere auf den Tragstab 3 aufgereihte Schablonenhälften) mit Hilfe eines frei beweglichen dritten Tragstabes 4, der in die noch zu beschreibende Steckleiste eingesteckt ist, abgenommen.

Auf den Tragstab 3 ist das Zentralstück 5 mittels seiner in Längsrichtung durchgehenden Quadratöffnung 6 aufgesteckt. Dieses Zentralstück hat ein rechteckiges Gesamt-Querschnittsprofil, ist oben leicht angeschrägt und trägt an der Unterseite ein Eisenblech 7, das vorzugsweise in einzelne locker angebrachte Plättchen aufgeteilt ist. Die Länge des Zentralstücks 5 entspricht im Beispiel der vierfachen Dicke einer Teilschablone, so daß vier solche Teilschablonen darauf Platz finden. Die vier Steckplätze sind festgelegt durch je zwei Rippen 8 an den Seitenflächen, so daß zu beiden Seiten des Zentralstücks 5 in entsprechenden Abständen je acht Rippen 8 angeformt sind.

Die Teilschablonen 9, 10 und 11, auch Schablonenkästen genannt, haben verschiedene Krümmungsradien. Die mittlere Größe mit einem Radius von 45 mm kommt in Fig. 6 zweimal vor. Jede Teilschablone hat eine Stützwand 12 in Form eines halben Kreiszylinders und zwei Seitenwände 13 mit je einem rechteckigen Ausschnitt 14, welcher der Außenform des Zentralstücks 5 entspricht. Die Stützwand und die Seitenwände sind durch eine kurze Rippe 15 miteinander verbunden. Die Seitenwände 13 stehen radial über die Stützwand 12 über und bilden die Halteränder 16 der Teilschablone, deren Innenfläche am Rand über eine Rundung spitzwinklig in die Außenfläche übergeht.

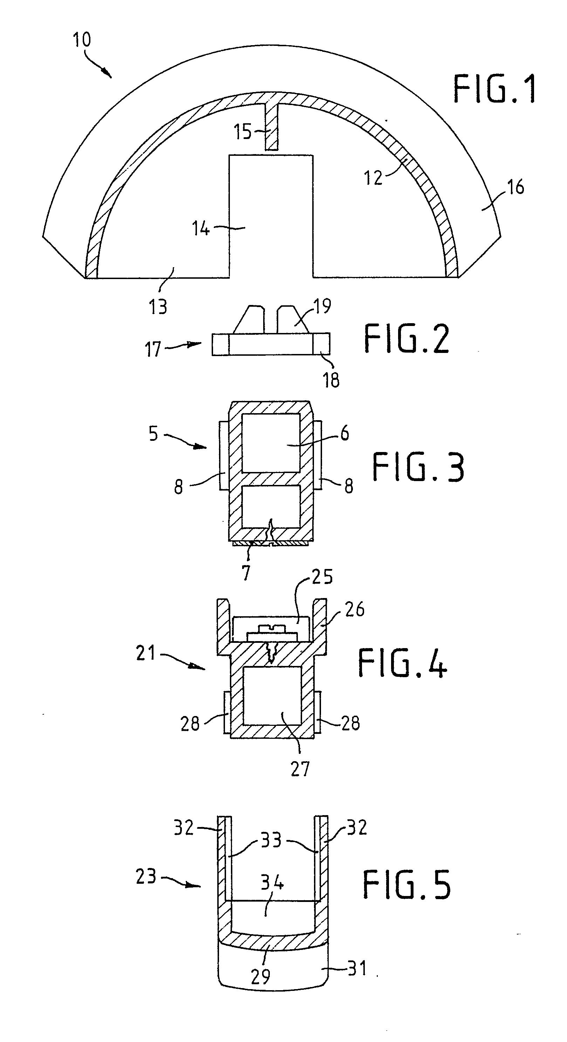

Ein Distanzstück 17, in Fig. 2 einzeln dargestellt, hat die Form einer rechteckigen Platte mit Eckausschnitten 18, so daß es in die Ausschnitte 14 und zwischen die Seitenwände 13 der Teilschablonen paßt. Eine zu der Platte senkrechte geschlitzte Rippe 19 fügt sich über die Rippe 15 und hält das Distanzstück dadurch in der Teilschablone fest.

Die gemäß Fig. 6 auf das Zentralstück 5 aufgesetzten Teilschablonen weisen (von links nach rechts) Sprünge von 7,5, 5 und 10 mm auf. Der Sprung zwischen den beiden gleichen mittleren Teilschablonen 10 ergibt sich durch das in die eine Teilschablone eingesetzte Distanzstück 17. Zweckmäßigerweise werden Distanzstücke in einer vernünftigen Dickenstufung bereitgehalten. Sollte sich zwischen den Seitenwänden benachbarter Teilschablonen durch Fertigungsungenauigkeiten ein schmaler radialer Spalt ergeben, so stört dies beim Bewickeln nicht, da der Wickelautomat selbsttätig so gesteuert ist, daß die führende Wickeldrahtöse auf der langen Distanz von einer Drahtkammer zur nächsten überspringt.

Im folgenden wird die abnehmbare Spulenstütze 20 beschrieben. Ähnlich dem Zentralstück bildet hierbei eine Steckleiste 21 (Fig. 4) das Verbindungselement zwischen dem Tragstab 4 und den einzelnen Stützkammeraufsätzen 22, 23 und 24, aus denen die Spulenstütze im Beispiel gebildet ist. Außerdem stellt die Steckleiste 21 mittels eines Haftmagneten 25, der in die querschnittlich U-förmige obere Partie der Stützleiste 21 eingefügt ist, die Verbindung mit dem Zentralstück 5 bzw. seinem Magnetblech 7 her. Das Zusammenfügen wird dadurch erleichtert, daß die Seitenwände 26 des U-förmigen Oberteils den Haftmagnet 25 überragen und sich an das Zentralstück 5 seitlich anlegen. Zur Aufnahme des Tragstabes 4 hat auch die Steckleiste 21 eine durchgehende Quadratöffnung 27 und zur Festlegung der Steckplätze für die Stützkammeraufsätze an jeder Seitenfläche vier angeformte Führungsrippen 28.

Die Stützkammeraufsätze 22 bis 24 sind mit ihren Stützwänden 29 etwa den Wölbungen der Teilschablonen nachgebildet, erstrecken sich jedoch nur über einen kleinen Bogen und sind dementsprechend schmal. Den Seitenwänden der Teilschablonen entsprechen bei den Stützkammeraufsätzen die Stirnwände 30 (Fig. 6), die als Halteränder 31 über die Stützwand überstehen. Dazu senkrechte Klemmwände 32 legen sich seitlich an den Steckleisten an und nehmen mit an der Innenseite angebrachten Nuten 33 die Führungsrippen 28 auf. Die höheren Stützkammeraufsätze haben außerdem zur Versteifung noch eine mittlere, zu den Stirnwänden 30 parallele Rippe 34.

Nach Fig. 6 sind ebenfalls die beiden mittleren Stützkammeraufsätze 23 untereinander gleich. Durch Einfügen einer einfachen Distanzplatte 35 zwischen der Steckleiste 21 und dem betreffenden Stützkammeraufsatz ist jedoch ein Höhensprung zwischen den Stützwänden herbeigeführt, so daß sich insgesamt die gleichen Sprünge wie bei den Teilschablonen ergeben.

Mit der beschriebenen Wickelschablone wird wie folgt gearbeitet: Zum Wickeln genügt es, an beiden Tragstäben 3 gleiche Schablonenhälften, d. h. beide ohne Spulenstütze, anzubringen. Nach Fertigstellung der Spulen wird die Spulenstütze an eine der beiden Schablonenhälften gemäß Fig. 6 angesetzt, so daß der Magnet 25 auf dem Eisenblech 7 haftet. Danach wird der Tragstab 4 eingefügt.

Es können aber auch, sofern mehrere Wickelschablonen bewickelt worden sind, mehrere Spulenstützen vorher auf den Tragstab 4 aufgereiht und dann gemeinsam angesetzt werden. Der Tragstab 4 erhält vorne eine Nase 4a aufgesetzt, die hinter das Zentralstück 5 greift und dadurch die zum Abziehen dieses und gegebenenfalls weiterer Zentralstücke von dem Tragstab 3 erforderliche Kraft ausübt. Die magnetische Haftkraft würde dazu nicht ausreichen. Nach dem Abziehen von den Tragstäben der Wickelmaschine werden die oberen Schablonenhälften über die angesetzten Spulenstützen 21 allein vom Tragstab 4 gehalten, während die unteren Schablonenhälften in den Spulen hängen.

Nun wird der Tragstab 4 um 180° um seine Längsachse gedreht, wobei die vier Spulen sich in die Drahtkammern der Stützkammeraufsätze legen, während die Teilschablonen leer nach unten stehen. Sie können nun durch eine knappe Kippbewegung um die Längsachse des Magneten 25 gelöst und in einer um 90° gedrehten Stellung aus den Spulen heraus genommen werden. Nachdem außerdem die untere Schablonenhälfte aus den Spulen heraus genommen ist, können die Spulen von der Spulenstütze weg zur Weiterverarbeitung in die Übertrager- oder Einziehwerkzeuge eingefügt werden.

## Ansprüche

1. Wickelschablone für in den Stator einer elektrischen Maschine einziehbare Spulen mit zwei bezogen auf die Wickelachse einander diametral gegenüberliegenden halbrunden, in Drahtkammern gegliederten Schablonenhälften, die auf umlaufende, hinsichtlich ihres gegenseitigen Abstandes einstellbare Tragstäbe einer Spulenwickelmaschine aufsteckbar sind, wobei eine der Schablonenhälften an der von den Drahtkammern abgewendeten Basisseite eine ablösbare Spulenstütze aufweist, an der eine zur Wickelachse parallele Aufnahmeöffnung für einen dritten Tragstab ausgebildet ist und deren Stützflächen den Drahtkammern entsprechend gestuft sind, dadurch gekennzeichnet, daß die Schablonenhälften ein auf den betreffenden Tragstab (3) aufsteckbares Zentralstück (5) und einzelne Teilschablonen (9, 10, 11) mit je einer Drahtkammer aufweisen, die auf das Zentralstück (5) aufsteckbar sind, wobei der Abstand der Basis der Teilschablonen vom Tragstab einstellbar oder wählbar ist.

2. Wickelschablone nach Anspruch 1, dadurch gekennzeichnet, daß der Abstand der einzelnen Teilschablonen (9, 10, 11) zum zugehörigen Tragstab (3) mit Hilfe von zwischen der Teilschablone und dem Zentralstück (5) einfügbaren Distanzstücken (17) unterschiedlicher Dicke wählbar ist.

3. Wickelschablone nach Anspruch 1, dadurch gekennzeichnet, daß das Zentralstück (5) und die Spulenstütze (20) zur gegenseitigen lösbaren Befestigung mit Haftmagneten (25) und Eisenplättchen (7) ausgestattet sind.

4. Wickelschablone nach Anspruch 1, dadurch gekennzeichnet, daß die Spulenstütze (20) aus einer von dem dritten Tragstab (4) aufnehmbaren Steckleiste (21) und einzelnen Stützkammeraufsätzen (22, 23, 24) unterschiedlicher Höhe besteht, die auf die Steckleiste (21) aufsteckbar sind.

FIG.1

10

15

12

16

14

13

FIG.2

19

17

18

FIG.3

5

6

8

8

7

FIG.4

25

26

21

28

28

27

FIG.5

32

33

32

23

34

29

31

FIG.6